# EUROPEAN PATENT APPLICATION

(11) **EP 2 562 916 A1**
(43) Date of publication of application: **27.02.2013**
(21) Application number: 10850175.0
(22) Date of filing: 22.04.2010
(51) Int. Cl.: H02K 15/04, H02K 3/04, H02K 15/06

(54) **STATOR AND METHOD FOR MANUFACTURING SAME**

(71) Applicant: Hitachi Automotive Systems, Ltd., Hitachinaka-shi Ibaraki 312-8503 (JP)
(72) Inventor: KIMURA, Yasuhiko, Hitachinaka-shi Ibaraki 312-8503 (JP); UEDA, Toshiaki, Hitachinaka-shi Ibaraki 312-8503 (JP); MORI, Yoshimi, Hitachinaka-shi Ibaraki 312-8503 (JP); AKATSU, Hiroyuki, Hitachinaka-shi Ibaraki 312-8503 (JP); ISHIKAWA, Toshio, Hitachinaka-shi Ibaraki 312-8503 (JP); HONMA, Masahiko, Hitachinaka-shi Ibaraki 312-8503 (JP)
(74) Representative: MERH-IP Matias Erny Reichl Hoffmann
(86) International application number: PCT/JP2010/002922
(87) International publication number: WO 2011/132228

(57) **Abstract**

In an existing technique, a mechanism for moving a bobbin back and forth when a conductor wire is wound around the bobbin is required, which makes a production apparatus complicated and expensive. Moreover, a process of transferring a coil is required, which increases the number of production processes.

A method for producing a stator of a rotating electrical machine includes: a winding process in which a conductor wire is sequentially wound around each of a plurality of winding bases, each being shaped like a projection, multiple times in alignment, the winding bases provided on an outer circumferential surface of a winding jig provided with a cylindrical portion having slits; an attachment process in which the cylindrical portion on which the winding has been performed is fitted into an inside diameter side of a stator core; and a coil movement process in which extension members are inserted into the slits from a central axis side to an outer perimeter side of the cylindrical portion and coils wound around the winding bases are moved to slots of the stator core.

## Description

### Technical Field

The present invention relates to a stator of a rotating electrical machine and a method for producing the stator.

### Background Art

A rotating electrical machine used for allowing an automobile to be driven electrically or regenerating energy is required to become compact and have high output power. It is for this reason that various coil insertion methods for reducing the axial size of a winding of a stator and reducing the amount of copper of a coil end portion (reducing copper loss) have been proposed.

For example, in Figs. 1-19 of Patent Literature 1, a production method by which a coil is inserted into a slot of a stator core by transferring the coil to a transfer jig after winding a conductor wire around a bobbin, inserting the transfer jig into the inside diameter side of the stator core, and moving an insertion blade to the outer perimeter side is described.

Moreover, in Figs. 30-48 of Patent Literature 1, a production method by which a coil is inserted into a slot of a stator core by directly inserting a winding jig into which a bobbin is incorporated into the inside diameter side of the stator core and moving an insertion blade to the outer perimeter side is described.

### Citation List

### Patent Literature

Patent Literature 1: Domestic Re-publication of PCT patent application WO03/01296

### Summary of Invention

### Technical Problem

In the production method described in Figs. 1-19 of Patent Document 1, a mechanism for moving the bobbin back and forth when winding is performed on the bobbin is required, which makes a production apparatus complicated and expensive. Moreover, a process of transferring the coil is required, which increases the number of production processes.

Also in the production method described in Figs. 30-48 of Patent Document 1, since a structure in which the bobbin incorporated into the winding jig can be moved back and forth to the outside is adopted, the structure becomes complicated.

Moreover, in a production method described in Figs. 30-45 of Patent Document 1, a state in which the whole of a winding jig is rotated to wind a coil around a bobbin is described, which makes the method disadvantageous due to an increase in the installation area of the apparatus.

In view of the problems described above, an object of the invention is to provide a production method and a stator, the production method that can produce a stator with a shortened coil end with great productivity by using an apparatus which is advantageous in terms of the installation area of an apparatus.

### Solution to Problem

To solve the problems described above, one of the preferred embodiments of the invention is as follows.

A method for producing a stator of a rotating electrical machine includes: a winding process in which a conductor wire is sequentially wound around each of a plurality of winding bases, each being shaped like a projection, multiple times in alignment, the winding bases provided on an outer circumferential surface of a winding jig provided with a cylindrical portion having slits; an attachment process in which the cylindrical portion on which the winding has been performed is fitted into an inside diameter side of a stator core; and a coil movement process in which extension members are inserted into the slits from a central axis side to an outer perimeter side of the cylindrical portion and coils wound around the winding bases are moved to slots of the stator core. Advantageous Effect of Invention

According to the invention, it is possible to provide a stator of a rotating electrical machine, the stator with a shortened coil end, and a method for producing the stator with an inexpensive apparatus with great productivity.

### Brief Description of Drawings

[Fig. 1] A diagram showing the flow of a stator production process.
[Fig. 2] A diagram showing a stator core.
[Fig. 3] A diagram showing a winding jig for winding a winding.
[Fig. 4] A diagram showing a state in which the formation of coils is completed.
[Fig. 5] A diagram of Fig. 4 viewed from above.
[Fig. 6] A diagram showing a fixing tube for fixing the positional relationship between the stator core and the winding jig.
[Fig. 7] A diagram showing an insertion guide insertion process in which the winding jig is placed inside the fixing tube.
[Fig. 8] A diagram of the winding jig viewed from above when the insertion guides are inserted.
[Fig. 9] A diagram showing the state of the stator core and the winding jig in a winding jig attachment process.
[Fig. 10] A diagram showing the fit state of the stator core and the winding jig.
[Fig. 11] A diagram showing the winding status of the stator of case 1.
[Fig. 12] A diagram showing the winding status of the stator of case 2.
[Fig. 13] A diagram showing the winding status of the stator of case 3.

### Description of Embodiments

Hereinafter, an embodiment will be described in detail by using the drawings.

### Embodiment

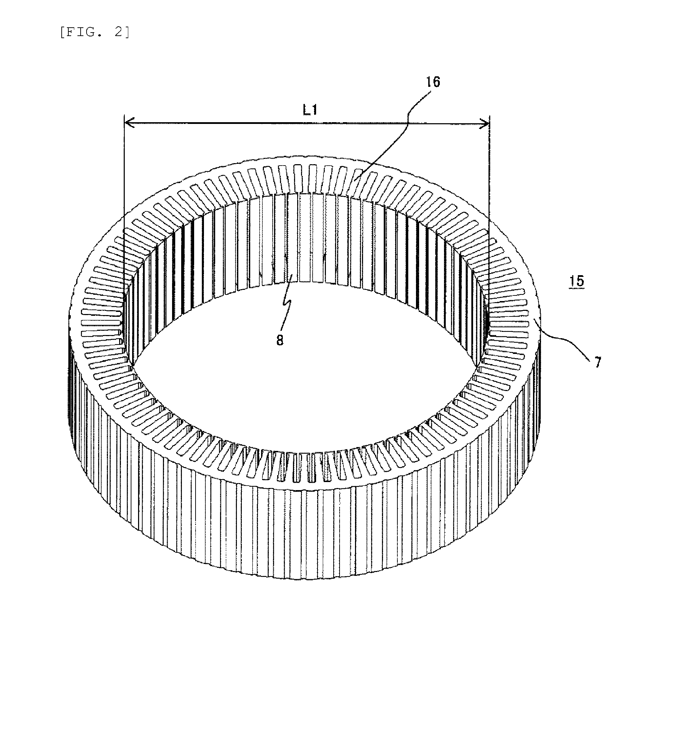

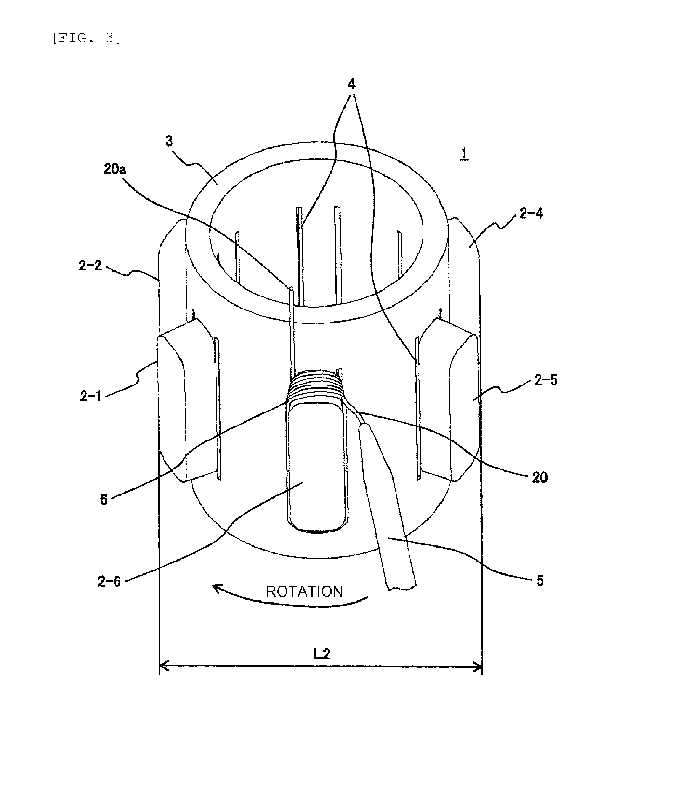

Fig. 2 is a diagram showing a stator core 15. The stator core 15 is formed of a core back 7, semi-open slots 16 in an inner-circumferential surface of the core back 7, and a plurality of teeth 8 between the slots 16. Coils are wound around the teeth 8. Incidentally, here, an example in which the number of slots of the stator core 15 is 72 is described; however, the number of slots may be 36, 48, or 96. It is assumed that the inside diameter L1 of the stator core 15 is greater than the outside diameter L2 of a winding jig 1 including winding bases 2 of Fig. 3. Therefore, it is possible to fit the winding jig 1 into the stator core 15.

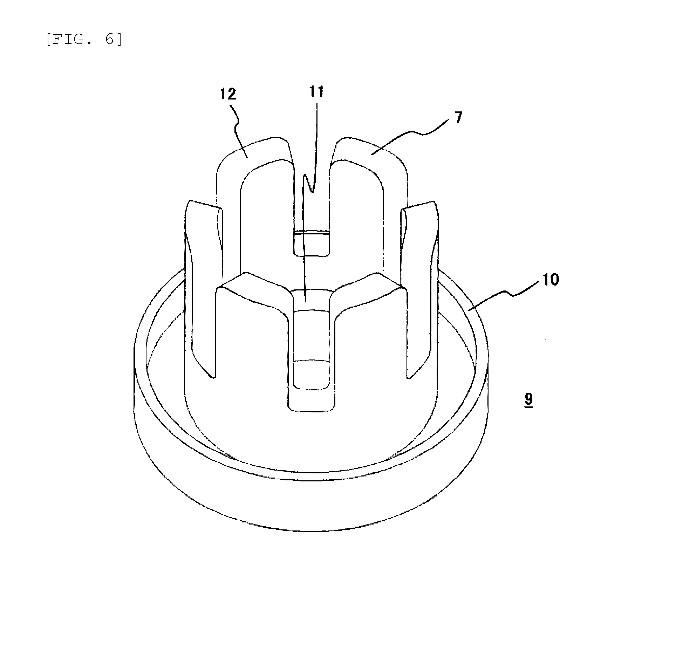

Fig. 3 is a diagram showing the winding jig 1 for winding a winding. Moreover, Fig. 6 is a diagram showing a fixing tube 9 for fixing the positional relationship between the stator core 15 and the winding jig 1 when the winding jig 1 is fitted into the stator core 15.

First, the winding jig 1 of Fig. 3 will be described. The winding jig 1 includes, as major component elements thereof, a cylindrical portion 3 having slits 4 formed therein and a plurality of winding bases 2 (2-1 to 2-6), each being shaped like a virtually rectangular projection, which are provided on the outer circumferential surface of the cylindrical portion 3. The axial length of the slit 4 is greater than the axial length of the winding base 2, and the number of slits 4 corresponds to the number of poles of a rotating electrical machine. Here, since an example of the winding jig 1 for 12 poles is shown, 6 winding bases 2 are disposed. Since the winding bases 2 are disposed in accordance with the pole number, for 16 poles, 8 winding bases 2 are disposed. Moreover, the width of the slit 4 corresponds to the number of pitches which will be described later.

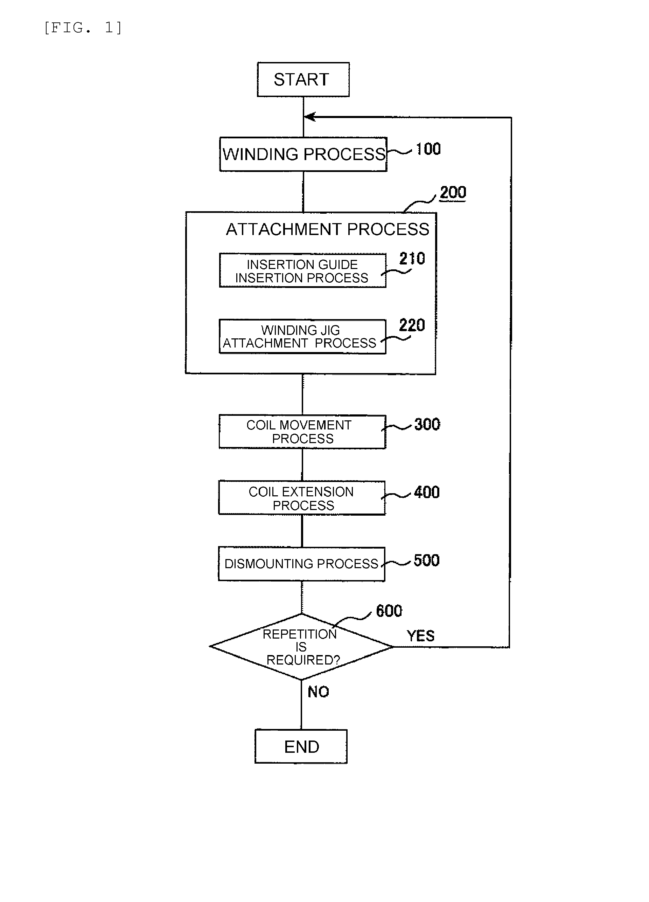

Hereinafter, description will be given in accordance with a flow of Fig. 1. Fig. 1 is a diagram showing the flow of a stator production process. A first stage of the stator production process is a winding process 100.

First, the winding jig 1 is fixed on an unillustrated platform, and a conductor wire 20 is wound around the winding bases 2 predetermined times by a winding apparatus.
As shown in Fig. 3, once the conductor wire 20 has been wound around the winding base 2-6, the platform on which the winding jig 1 is fixed is rotated and moved to a position in which the next winding base 2-5 faces the winding apparatus. In Fig. 3, only a winding guide 5 of the winding apparatus is shown. Incidentally, the winding jig 1 and the winding guide 5 simply have to rotate relatively and move to a position in which the winding bases 2 sequentially face the winding guide 5, and the winding jig 1 may be fixed and secured and the winding apparatus may move in a circumferential direction thereof and sequentially wind the conductor wire 20.

The winding guide 5 is numerically-controlled in X, Y, and Z directions with respect to the winding base 2-6 of the winding jig 1, and sends the conductor wire 20 while moving in a virtually spiral fashion in such a way as to conform to the virtually rectangular projection of the winding base 2-6 and winds the conductor wire 20 around the winding base 2-6 multiple times in a state in which the conductor wire 20 forms one line. Here, an example in which 8 turns are made is shown.

As described above, by repeating a transition operation in which winding is performed on one winding base and then on the next winding base such that the conductor wire 20 is sequentially wound around the next winding bases 2-4 and 2-5 after the conductor wire 20 is wound around the winding base 2-6, the conductor wire 20 is continuously wound around all the winding bases 2 of the winding jig 1. The conductor wire 20 continuously wound around all the winding bases 2 of the winding jig 1 forms coils 6. Incidentally, in Fig. 3, a coil winding start portion 20a is a portion from which winding of the coils 6 is started. According to this embodiment, in the process in which the coil is wound around the winding jig 1, it is possible to perform winding continuously without the need to move the winding base 2 back and forth and therefore reduce the winding time.

Incidentally, when the winding jig 1 is rotated in a circumferential direction and the winding guide 5 is moved in accordance with the winding operation, a mechanism for driving the winding guide 5 of the winding apparatus can be simplified.

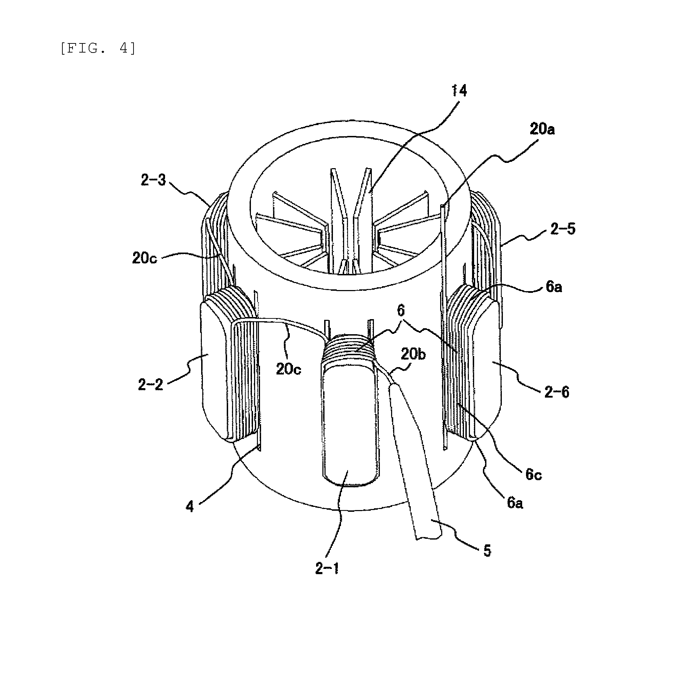

Fig. 4 is a diagram showing a state in which the formation of the coils 6 is completed by continuously winding the conductor wire 20 around all the winding bases 2 (2-6 to 2-1). The conductor wire 20 between the coils wound around the winding base 2-2 and the winding base 2-1 is a so-called transition portion 20c. The coils 6 which are seamless from the coil winding start portion 20a to a coil winding end portion 20b are formed. In this drawing, a state is shown in which winding is started from the side of the winding base 2-6 where the cylindrical portion 3 is located, and, after 8 turns are continuously made, winding is then performed on the winding base 2-5, and, after continuous winding is also performed thereon in the same manner, continuous winding is repeatedly performed sequentially on the winding bases until continuous winding is performed on the winding base 2-1.

As will be described later, in a state in which the coils 6 are inserted into the slots 16, of the coil 6 on the winding base 2-6, upper and lower portions 6a of the coil correspond to portions (coil ends) located outside the slots 16 of the stator core 15, and side portions 6c of the coil correspond to portions located inside the slots 16. The side portions 6c of the coil are portions in which an electromagnetic force of a stator is generated. On the other hand, since the transition portion 20c and the upper and lower portions 6a of the coil are portions which do not contribute to the generation of an electromagnetic force, the shorter these portions are made, the lower the copper loss can be made.

Incidentally, concentrically-disposed push plates 14 located inside the cylindrical portion 3 are used in a coil movement process which will be described later. The push plates 14 may be disposed in these positions from the start or may be disposed in these positions after continuous winding. The push plates 14 are disposed by being inserted into the slits 4.

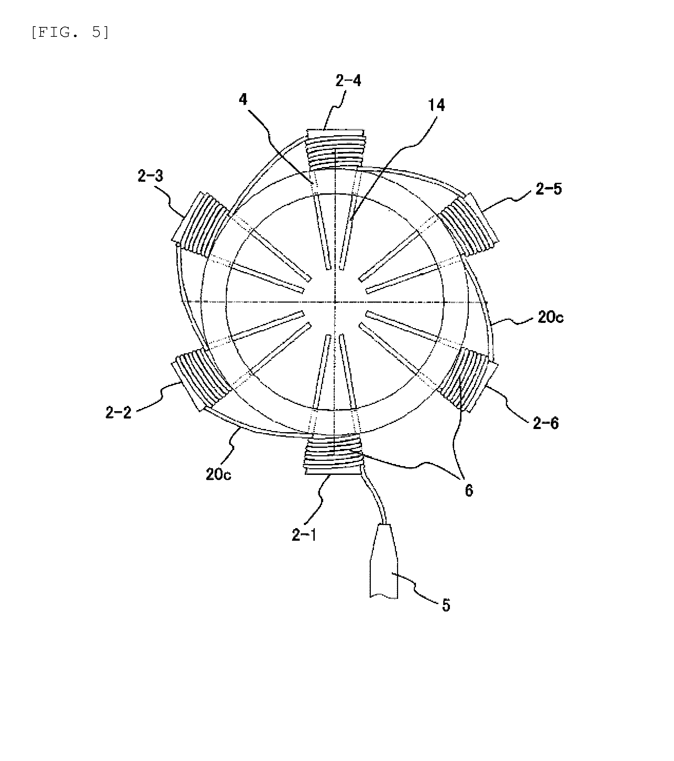

Fig. 5 is a diagram of Fig. 4 viewed from above. The push plates 14 are disposed by being inserted into the slits 4, and the positions of the slits 4 are set in the positions of the coils 6 at both ends of the winding bases 2-1 to 2-6.

A second stage of the stator production process is an attachment process. An attachment process 200 is a process of fitting the winding jig 1 into the stator core 15 and is further divided into an insertion guide insertion process 210 and a winding jig attachment process 220. In the following description, a method using the fixing tube 9, the method which can be implemented more easily, will be described.

Fig. 6 is a diagram showing the fixing tube 9 for fixing the positional relationship between the stator core 15 and the winding jig 1. The fixing tube 9 is a cylindrical body with a bottom and has placement portions 10 and 11 in the positions of circumferences of two circles having different diameters. Moreover, on the outside of the inner placement portion 11, a plurality of insertion guides 12 are provided in a height direction. Incidentally, the insertion guides 12 of the same number as the number of the winding bases 2 of Fig. 4 are prepared and are each along the position and the width of the space between the two adjacent winding bases 2.

First, the winding jig 1 is placed on the inner placement portion 11 of the fixing tube 9, and the stator core 15 is then placed on the outer placement portion 10. As a result, the winding jig 1 is fitted into the stator core 15 in a state in which they can move relative to each other. The process performed when the winding jig 1 is placed is the insertion guide insertion process 210, and the process performed when the stator core 15 is placed on the outer placement portion 10 is the winding jig attachment process 220.

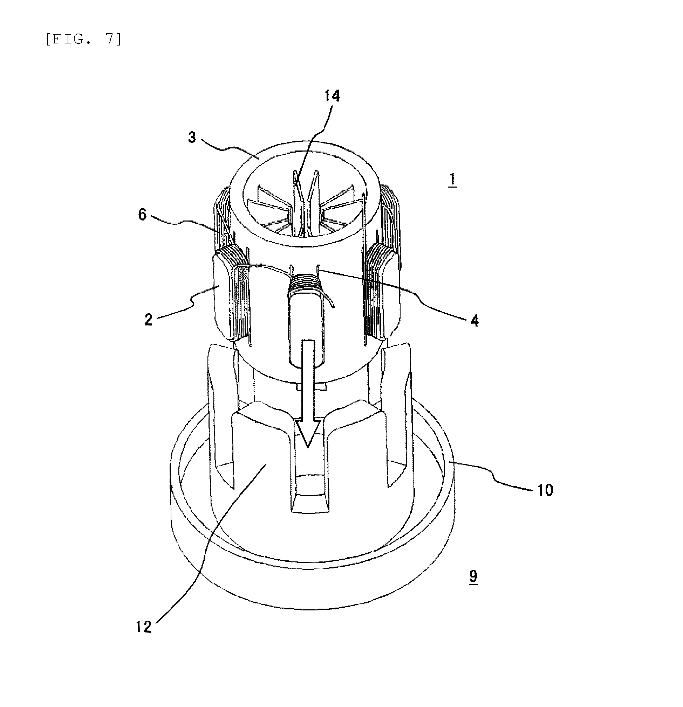

Fig. 7 is a diagram showing the insertion guide insertion process 210 in which the winding jig 1 is placed on the inner placement portion 11. The insertion guides 12 are each inserted into the space between the two adjacent winding bases 2. There is a space, which will be described later, between the insertion guide 12 and the winding base 2.

In this process, by inserting the insertion guides 12, from the direction of a central axis, between the two adjacent winding bases 2 around which the coils are wound, it is possible to correct a winding bulge of the wound coil. Furthermore, the coil can be placed in proper alignment and the insertion of the coil into the stator core 15 is stabilized. That is, the coils 6 are put into a state in which the coils 6 are sandwiched between the winding bases 2 of the winding jig 1 and the insertion guides 12, and, since the insertion guides 12 are inserted from an axial direction, the state in which the coils 6 are placed in alignment is ensured. Therefore, the fixing base 9 can also be referred to as a coil shaping base because the fixing base 9 has the function of not only fixing but also shaping the coil.

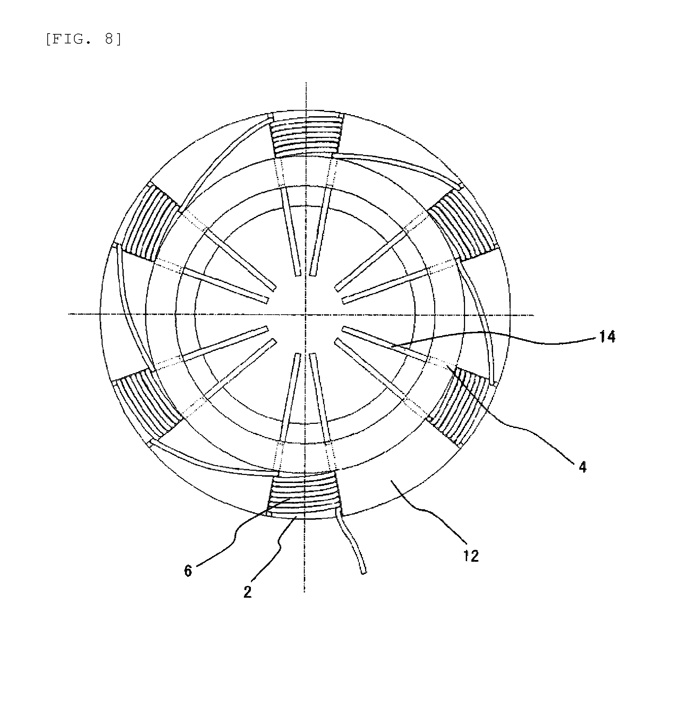

Fig. 8 is a diagram of the winding jig 1 viewed from above when the insertion guides 12 are inserted. The coils 6 are pushed, at both side faces thereof, by the insertion guides 12 and the winding bases 2, whereby the coils 6 can be placed in proper alignment. Moreover, the push plates 14 are disposed by being inserted into the slits 4, and the positions of the slits 4 are set in the positions of the side portions 6c of the coils wound around the winding jig 1.

The advantage of this embodiment in this point will be described in more detail. In a state in which the coils 6 are wound around the winding bases 2, the insertion guides are inserted between the winding bases 2 from the axial direction of the winding jig 1. Here, since the coils 6 which are wound around the winding bases 2 in such a way as to form one line are wound to have a virtually rectangular shape, a winding bulge is generated in the side portions 6c of the coils on the winding bases 2. To reduce a winding bulge, tension at the time of winding is usually increased; however, this stretches the conductor wire 20 and reduces the diameter of the wire, resulting in an increase in coil resistance.

In this regard, in this embodiment, since it is possible to correct a winding bulge by inserting the insertion guides 12 even when winding is performed with a lower tension and a winding bulge, it is possible to prevent an increase in coil resistance associated with stretching of the conductor wire 20. Incidentally, the space between the winding base 2 and the insertion guide 12 is greater than the diameter of the wire of the coil 6 (including an insulating film), ensuring a clearance that allows the coil 6 to move in the radial direction of the winding jig 1.

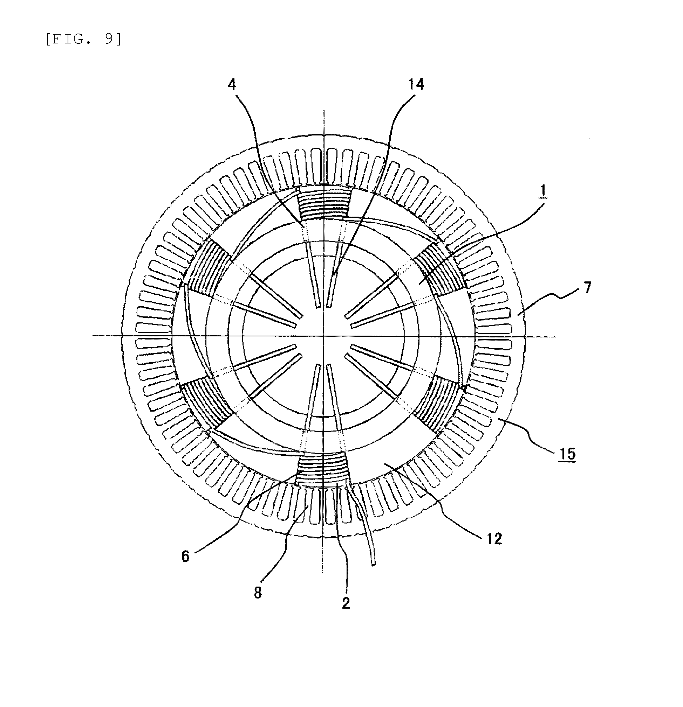

Fig. 9 is a diagram showing the state of the stator core 15 and the winding jig 1 which are viewed from above in the winding jig attachment process 220. In an example of Fig. 9, the teeth 8 are placed in positions facing the winding bases 2 having virtually the same size and width. Incidentally, in the example of Fig. 9, 5 slots (4 pitches) of the slots of the stator core 15 correspond to the winding base 2.

In the attachment process 200, as described earlier, it is preferable to perform relative positioning in such a way that the stator core 15 and the winding jig 1 are placed in the fixing tube 9 and the plurality of insertion guides 12 of the fixing tube 9 are inserted, from the direction of a central axis, between the winding bases 2 of the winding jig 1.

In this case, in Fig. 9, the winding jig 1 and the insertion guides 12 are inserted into the inside diameter side of the stator core 15 in positions in which the coils 6 on the winding bases 2 and the teeth 8 of the stator core 15 face each other. Since the coils 6 of the winding jig 1 are held by the winding bases 2 and the insertion guides 12 and are located on the inside diameter side of the stator core 15, the coils 6 do not collide with the stator core 15 when insertion into the stator core 15 is performed.

Incidentally, since it is necessary simply to obtain eventually the positional relationship of Fig. 9, the insertion guide insertion process 210 and the winding jig attachment process 220 may be performed in reverse order. Moreover, the above process can be performed by a method that does not use the fixing tube 9.

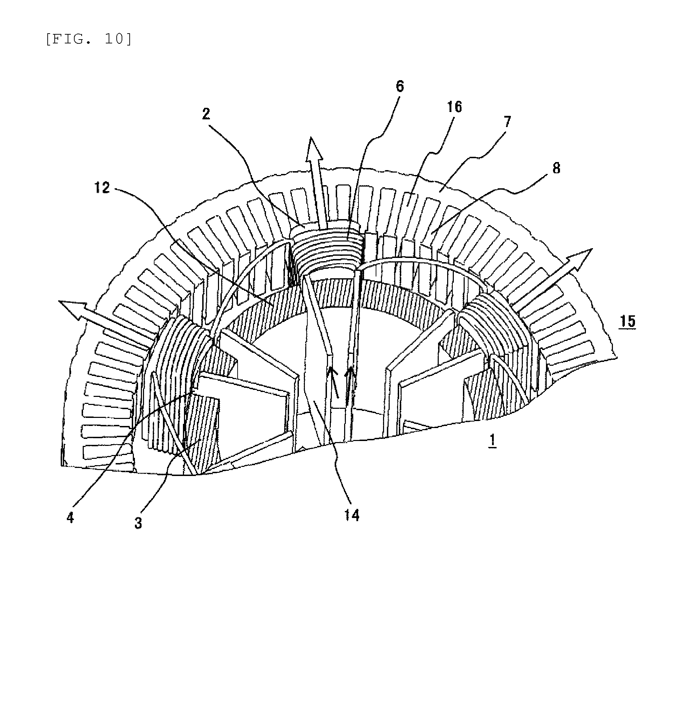

A third stage of the stator production process is a coil movement process 300. Fig. 10 is a diagram showing the fit state of the stator core 15 and the winding jig 1, the fit state obtained in the previous stage of this process. In the drawing, the cylindrical portion 3 whose upper part is cut is shown. The winding jig 1 is placed in the stator core 15, and the coils 6 are wound around the winding bases 2 and are held. Moreover, as shown in Fig. 4, the slits 4 are formed in the cylindrical portion 3 of the winding jig 1 in positions along both side faces of the winding bases 2, and the push plates 14 are disposed in the slits 4 by being inserted thereinto.

In this embodiment, in the above-described positional relationship, the push plates 14 are disposed in the positions of the slots 4 as extension members for extending the coils 6, and the push plates 14 are inserted into the slits 4 from the central axis side to the outer perimeter side of the cylindrical portion 3. The coils 6 wound around the winding bases 2 of the cylindrical portion 3 are pushed to the slits 4 as a result of the movement of the push plates 14 in the slits.

As a result, the coils 6 move from the winding bases 2 of the cylindrical tube 3 of the winding jig 1 to the side of the stator core 15 where the teeth 8 are located. Then, the coils 6 are eventually pushed into the slots 16 formed between the teeth 8. In this way, the coils 6 move from the winding jig 1 to the stator core 15. The transferred coils 6 are stator windings.

The basic process of a production method of this embodiment is performed in the manner described above; however, a coil extension process 400 may be further performed as a fourth production process. The coil is wound and stacked on the already-wound coil by repeatedly performing the above-described successive processes multiple times as necessary. In this case, to wind and stack the coil on the already-wound coil efficiently in a narrow area, it is preferable to perform the next coil transfer and insertion smoothly by widening the transition portion 20c to the outer perimeter side.

Furthermore, as a fifth production process, a dismounting process 500 in which the stator core 15, the winding jig 1, and the fixing tube 9 which have been assembled are dismounted to an initial state may be performed. That is, the state is restored to the state shown in Figs. 2 and 3 by removing the push plates 14 and detaching the stator core 15 and the winding jig 1 from the fixing tube 9. However, it goes without saying that, in this state, the wound coils 6 are already wound in the stator core of Fig. 2.

The following is the summary of the flow of Fig. 1.

The winding process 100: The conductor wire 20 is wound around the winding bases 2 multiple times by moving the winding guide 5 of the winding apparatus in a virtually rectangular spiral fashion with respect to the radially projecting winding bases 2 provided in the winding jig 1 from the outside in the radial direction of the winding jig 1. By sequentially moving the winding guide 5 from one winding base 2 to another winding base 2 next thereto and repeatedly performing the winding operation, the conductor wire is successively wound around the winding bases 2 of the winding jig 1 in alignment.

The attachment process 200: The winding jig 1 is fitted into the stator core 15. This process is formed of the insertion guide insertion process 210 and the winding jig attachment process 220.

The insertion guide insertion process 210: The insertion guides 12 are inserted between the adjacent winding bases 2 from an axial direction.

The winding jig attachment process 220: The winding jig 1 is inserted into the inside diameter side of the stator core 15 from an axial direction. The coils sandwiched between the winding bases 2 and the insertion guides 12 are positioned in positions facing the slots 16 of the stator core 15.

The coil movement process 300: The coils sandwiched between the winding bases 2 and the insertion guides 12 are pushed to the outside in the radial direction of the winding jig 1 by the push plates 14 provided on the inside diameter side of the winding jig 1, and the coils are inserted into the slots 16 of the stator core 15.

The coil extension process 400: The transition portion 20c is widened to the outer perimeter side.

The dismounting process 500: By returning the push plates 14 to the inside diameter side of the winding jig 1 and moving the winding jig 1 and the insertion guides 12 from the stator core 15 in an axial direction, the stator core 15 and the winding jig 1 are dismounted.

Thereafter, in a process 600, it is determined whether or not there is a need to repeat a series of processes, and, if there is a need to repeat a series of processes, the procedure goes back to the winding process 100; if there is no need to repeat a series of processes, the series of processes is ended.

By repeating the production procedure described above while shifting the positions of the slots 16 in a circumferential direction, the slots 16 into which the coils are inserted, the coils in each phase are inserted, and insertion of two groups of three-phase coils is eventually completed. In the case of 12 poles and 72 slots of the stator core 15 of Fig 2, a slot pitch of 6 corresponds to a full pitch at an electrical angle of 180 degrees. In the example of Fig. 9, the coil is wound with a slot pitch of 4 at an electrical angle of 120 degrees.

Although the invention has been described above, the above description conceptually expresses and illustrates the fundamental idea of the invention. When the invention is implemented as an actual apparatus, ingenuity can be exercised in various ways. Hereinafter, specific disclosures and suggestions in implementing the invention will be described.

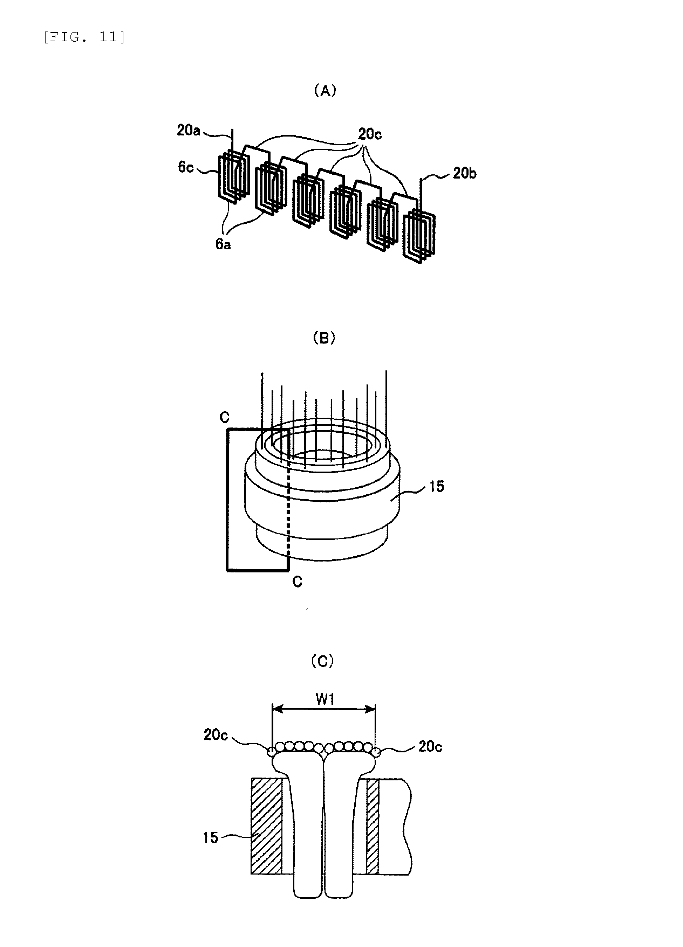

As shown in Fig. 11(A), when the conductor wire 20 is wound around the winding bases 2 in a direction opposite to the direction in which the winding apparatus is moved, it is preferable to provide a holding member guiding the coil 6 the transition portion 20c between the winding bases 2 in Fig. 3. As a result, since it is possible to maintain proper alignment of the coil without allowing the wound portions to cross each other, insertion of the coil into the stator core is stabilized, coil damage can be prevented, and the quality is improved.

Moreover, the insertion guides 12 of Figs. 6 and 7 are integrated with the placement portions 10 and 11 of the fixing tube 9 for performing concentric positioning of the stator core 15 and the winding jig 1; however, they may be provided separately.

Furthermore, the positions and the shape of the slits 4 in Fig. 3 etc. and holding of the push plates 14 of Fig. 9 or a mechanism for moving the push plates 14 to the outer perimeter side can be implemented as various structures. As the mechanism for moving the push plates 14 to the outer perimeter side, for example, a mechanism in which a push tapered member to which the push plates 14 are temporarily attached is pushed downward in an axial direction along the central axis of the winding jig 1 in a state in which the stator core 15 and the winding jig 1 are fitted together in Fig. 9 is adopted. A tapered portion can be provided also in the push plates 14 so that the tapered portion of the push tapered member and the tapered portions of the push plates 14 make contact with each other and the push plates 7 are radially pushed to the outside in the radial direction of the winding jig 1.

Moreover, at this time, the central part of a coil end portion of each wound coil 6 may be pressed. Since the coils 6 are radially pushed from the inside diameter side of the stator core 7, even a coil with a low coil end can be easily inserted into the teeth 8. Next, a stator of a rotating electrical machine produced by the production method of this embodiment will be described. Description will be given by taking up, as an example, a case in which a series of processes (100 to 500) of Fig. 1 are repeated 12 times.

To describe the feature of this embodiment, it is assumed that three different types of winding processing are performed when the repetition processing of Fig. 1 is performed. In a first case, it is assumed that the processing of Fig. 1 is simply repeated. In a second case, it is assumed that, in the first six repetition operations and in the latter six repetition operations, the direction in which the winding jig 1 is fitted is changed when the stator core 15 and the winding jig 1 are fitted together. In a third case, it is assumed that the direction in which the winding jig 1 is fitted is changed every time the stator core 15 and the winding jig 1 are fitted together. In the second and third cases, changing the direction in which the winding jig 1 is fitted means that, when a fit of Fig. 7 is made, there are cases in which attachment is performed in the position in the drawing and attachment is performed by inverting the winding jig 1 (by turning the winding jig 1 in this drawing upside down). Incidentally, in this case, no operational change is made to the stator core 15.

Fig. 11 is a diagram showing the winding status of the stator of case 1. Fig. 11(A) shows the configuration of the coils 6 in which only the coils 6 are extracted and developed, the configuration obtained when one winding operation of Fig. 1 is performed. Here, the coils 6 include, between the coil winding start portion 20a and the coil winding end portion 20b, the upper and lower portions 6a of the coils, the side portions 6c of the coils, and the transition portions 20c. As a stator of a finished product, it is desirable to make the transition portion 20c as small as possible to minimize a portion of the transition portion 20c, the portion lying outside the stator.

Fig. 11 (B) shows the stator after the coils 6 are wound 12 times around the stator core 15. Furthermore, Fig. 11(C) shows the C-C cross section of the stator at this time. In case 1, since 12 coils in which the transition portions 20c are present on the upper sides are made as they are, as shown in Fig. 11(C), the transition portions 20c are present only in the upper part of the stator. Therefore, since no transition portion 20c is present in the lower part of the stator, a portion of the transition portion 20c rarely lies outside the stator on the lower-part side of the stator; however, since the transition portions 20c of all the sets (12 sets) are present in the upper part, the portions lying outside the stator are concentrated on the upper-part side of the stator. The width of the transition portions 20c at this time is referred to as W1.

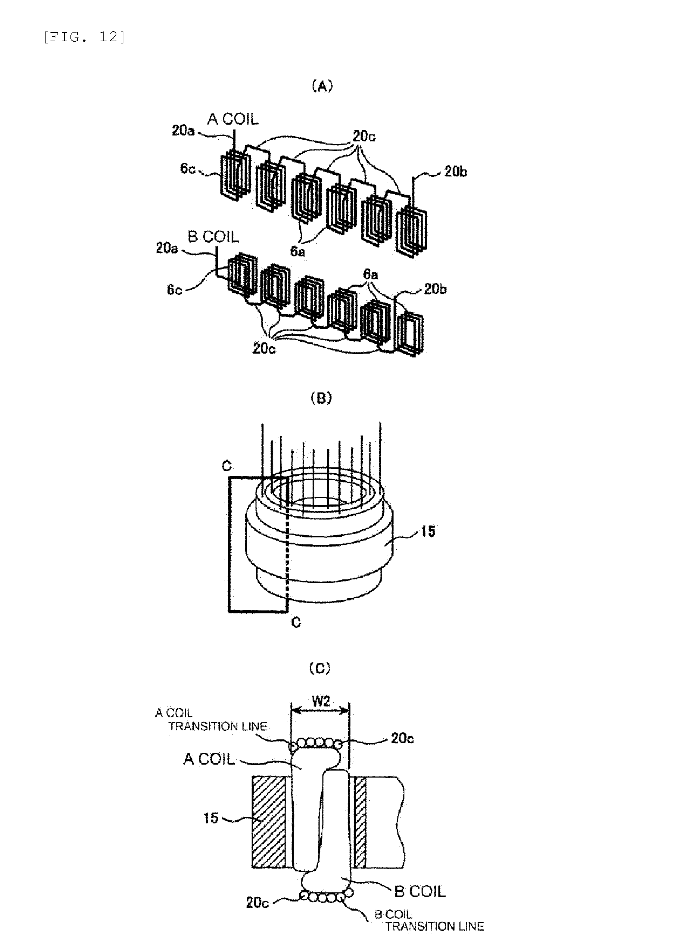

Fig. 12 is a diagram showing the winding status of the stator of case 2. In case 2, in the first six winding operations and in the latter six winding operations, the direction in which the winding jig 1 is fitted is changed when the stator core 15 and the winding jig 1 are fitted together. In Fig. 12 (A), coils A which are wound around the stator in the first half and coils B which are wound around the stator in the latter half are shown. The coil in which the transition portion 20c is located in the upper direction is the A coil, and the coil in which the transition portion 20c is located in the lower direction is the B coil.

Fig. 12 (B) shows the stator after 12 winding operations. Furthermore, Fig. 12(C) shows the C-C cross section of the stator at this time. In case 2, since six A coils in which the transition portions 20c are present on the upper side are made in the first half and six B coils in which the transition portions 20c are present on the lower side are made in the latter half, as shown in Fig. 12(C), 6 transition portions 20c are uniformly present on both the upper and lower sides of the stator. Therefore, portions lying outside the stator are uniformly present on the upper and lower sides. When the width of the transition portions 20c at this time is referred to as W2, it is clearly smaller than W1 of case 1 and fits in a smaller area.

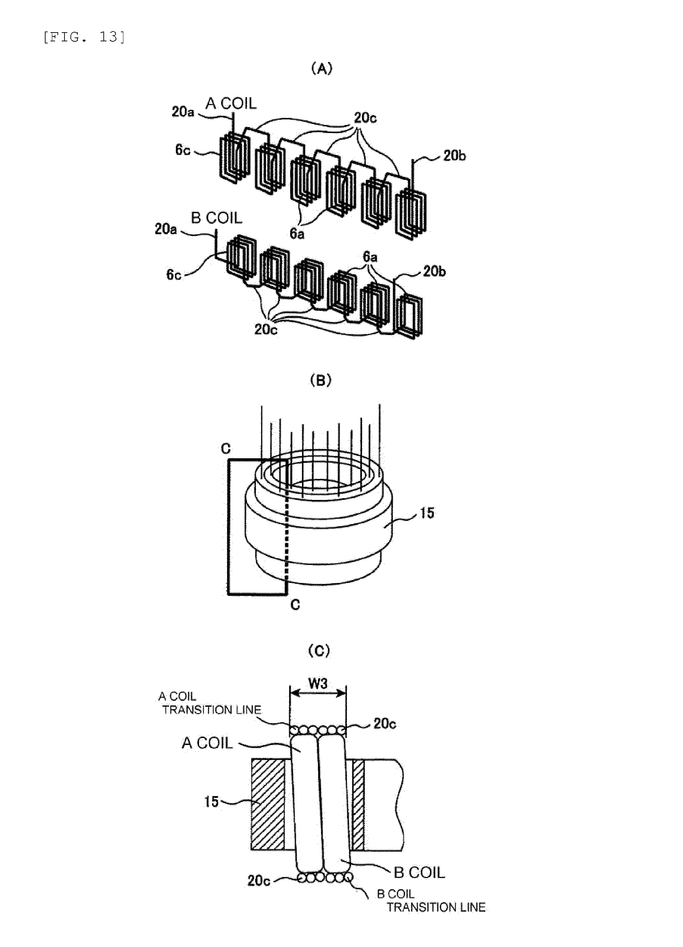

Fig. 13 is a diagram showing the winding status of the stator of case 3. It differs from Fig. 12 in that, since the direction in which the winding jig 1 is fitted is changed each time, 6 transition portions 20c are alternately and uniformly present on both the upper and lower sides of the stator. Therefore, portions lying outside the stator are uniformly present on the upper and lower sides. When the width of the transition portions 20c at this time is referred to as W3, it is clearly smaller than W2 of case 2 and can fit in an even smaller area.

As described above, of cases 1 to 3 of the technique for implementing the production method of Fig. 1, case 3 is advantageous if making the coil end portion lying outside the stator core 15 smaller is the only goal. However, the production apparatus becomes larger and complicated and the workability is poor due to inversion performed each time. In this regard, case 2 is a method that satisfies both of size reduction and workability.

The structural feature of the stator of the rotating electrical machine, the stator produced by adopting the production method of Fig. 1 and using case 2, is that, as is clear from the illustration of Fig. 12(C), the transition portions 20c are present on both the upper and lower sides of the stator core 15, and the transition portions on one side are unevenly distributed on the outer perimeter side than the transition portions on the other side and the transition portions on the other side are unevenly distributed on the inner perimeter side than the transition portions on the one side.

Moreover, the structural feature of the stator of the rotating electrical machine, the stator produced by adopting the production method of Fig. 1 and using case 3, is that, as is clear from the illustration of Fig. 13(C), the transition portions 20c are present on both the upper and lower sides of the stator core 15, and the transition portions are alternately disposed on the upper and lower sides. Incidentally, a way of allocating the transition portions 20c to the upper and lower sides of the stator core 15 is not limited to the way described above.

### Industrial Applicability

Various embodiments have been described above, and the embodiments described above make it possible to provide a method for producing a stator with a shortened coil end with an inexpensive apparatus with great productivity. Moreover, since the embodiments described above make it possible to produce a stator of a rotating electrical machine easily and speedily, the embodiments can be applied to rotating electrical machines for many uses.

### Description of Reference Numerals and Signs

- 1:: winding jig
- 2:: winding base
- 3:: cylindrical portion
- 4:: slit
- 5:: winding guide
- 6:: coil
- 7:: core back
- 8:: teeth
- 9:: fixing tube
- 10, 11:: placement portion
- 12:: insertion guide
- 14:: push plate
- 15:: stator core
- 16:: slot
- 20:: conductor wire

## Claims

1. A method for producing a stator of a rotating electrical machine, comprising:
a winding process in which a conductor wire is sequentially wound around each of a plurality of winding bases, each being shaped like a projection, multiple times in alignment, the winding bases provided on an outer circumferential surface of a winding jig provided with a cylindrical portion having slits;
an attachment process in which the winding jig on which the winding has been performed is fitted into an inside diameter side of a stator core; and
a coil movement process in which extension members are inserted into the slits from a central axis side to an outer perimeter side of the winding jig and coils wound around the winding bases are moved to slots of the stator core.

2. The method for producing a stator of a rotating electrical machine according to claim 1, further comprising:
a dismounting process in which the extension members are removed and the winding jig and the stator core are disengaged.

3. The method for producing a stator of a rotating electrical machine according to claim 2, wherein
when a series of processes from the winding process to the dismounting process are performed N (which is an integer) times, a direction in which the winding jig is attached to the stator core from the first operation to the M (which is an integer smaller than N) -th operation of the series of processes is opposite to a direction in which the winding jig is attached to the stator core from the M+1-th operation to the N-th operation.

4. The method for producing a stator of a rotating electrical machine according to claim 2, wherein
when a series of processes from the winding process to the dismounting process are performed repeatedly, a direction in which the winding jig is attached to the stator core is reversed every time the series of processes are repeated.

5. The method for producing a stator of a rotating electrical machine according to claim 1, wherein
the attachment process includes an insertion guide insertion process in which insertion guides are inserted between the winding bases of the winding jig from an axial direction and a winding jig attachment process in which the winding jig is inserted into an inside diameter side of the stator core from an axial direction in a state in which the insertion guides are inserted between the winding bases.

6. The method for producing a stator of a rotating electrical machine according to claim 5, further comprising:
a dismounting process in which the extension members are removed and a fit state of the stator core is ended.

7. The method for producing a stator of a rotating electrical machine according to claim 6, wherein
when a series of processes from the winding process to the dismounting process are performed N (which is an integer) times, a direction in which the winding jig is attached to the stator core from the first operation to the M (which is an integer smaller than N) -th operation of the series of processes is opposite to a direction in which the winding jig is attached to the stator core from the M+1-th operation to the N-th operation.

8. A stator of a rotating electrical machine, wherein
transition portions are present on upper and lower sides of a stator core, and the transition portions on one side are unevenly distributed on an outer perimeter side of the stator core than the transition portions on the other side and the transition portions on the other side are unevenly distributed on an inner perimeter side of the stator core than the transition portions on the one side.

9. A stator of a rotating electrical machine, wherein
transition portions are present on upper and lower sides of a stator core, and the transition portions are alternately disposed on the upper and lower sides.
